(19) **Europäisches Patentamt**

**European Patent Office**

**Office européen des brevets**

(11) **EP 1 508 896 A1**

(12) **EUROPEAN PATENT APPLICATION**
published in accordance with Art. 158(3) EPC

(43) Date of publication:
23.02.2005 Bulletin 2005/08

(51) Int Cl.⁷: **G11B 7/0055**, G11B 7/125,
G11B 7/26

(21) Application number: 03733144.4

(22) Date of filing: 29.05.2003

(86) International application number:
**PCT/JP2003/006741**

(87) International publication number:
**WO 2003/102933 (11.12.2003 Gazette 2003/50)**

(84) Designated Contracting States:
**AT BE BG CH CY CZ DE DK EE ES FI FR GB GR
HU IE IT LI LU MC NL PT RO SE SI SK TR**

(30) Priority: **30.05.2002 JP 2002157154**

(71) Applicant: **HITACHI COMPUTER PERIPHERALS
CO., LTD.
Kanagawa 259-0180 (JP)**

(72) Inventors:
• **OGINO, Y.,
c/o HITACHI COMPUTER PERIPHERALS CO
Kanagawa 259-0180 (JP)**

• **SATAKE, Y.c/o HITACHI COMPUTER
PERIPHERALS CO
Kanagawa 259-0180 (JP)**
• **SHIRASAKA, S.,
c/o HITACHI COMPUTER PERIPHERALS CO
Kanagawa 259-0180 (JP)**

(74) Representative: **Dr. Weitzel & Partner
Friedenstrasse 10
89522 Heidenheim (DE)**

(54) **OPTICAL DISK INITIALIZING DEVICE AND INITIALIZING METHOD**

(57) An optical disk initializing device comprising a laser pulse radiating means for pulse-radiating a laser beam, and a moving means for moving an applied oval laser spot from one end of an initialization-requiring radius area to the other end at an angle $\alpha$ ($0 < \alpha < 180$ degrees) with respect to the optical disk radial direction, wherein the optical disk is initialized with the moving means keeping the angle $\alpha$ of a laser spot and with the laser pulse radiating means generating pulses so that a laser spot superposing ratio is kept the same across the inner and outer peripheries of the optical disk, whereby it is possible to obtain a uniform initialization condition from the inner-most periphery to the outer-most periphery while a rotating speed and the feed speed of a laser spot are kept constant; and an initializing method.

FIG. 2 (a) Case that initialization is started from inner circumferential side of optical disc

FIG. 2 (b) Case that initialization is started from outer circumferential side of optical disc

## Description

### TECHNICAL FIELD

The present invention relates to an initializing method of an optical disk for recording and reproducing information on the basis of laser beam irradiation and an initializing apparatus of the same, and more particularly to an initializing method and an initializing apparatus for obtaining a uniform initialization state in a whole area of the optical disk.

### BACKGROUND ART

A phase change type optical disk becomes widely generally popular as a rewritable recording medium having a high density. This phase change type optical disk is structured such that the information is recorded and reproduced by changing a recording layer to a crystalline material or an amorphous material on the basis of an intensity of the irradiated laser beam, and thereafter detecting a reflection factor change between the crystalline material and the amorphous material.

The phase change type optical disk is structured such that a reflecting layer, a recording layer, a protecting layer and the like are laminated on a transparent substrate, these layers are formed by using a sputtering method, a vacuum evaporation method or the like, and the recording layer just after being formed is generally in an amorphous state. The recording layer in the amorphous state normally has a very low reflection factor in a laser wavelength band of an optical disk driving apparatus, and an automatic focusing control and a tracking control indispensable for a recording and reproducing operation become unstable. Accordingly, in the phase change type optical disk, in order to set the formed recording film to a state capable of recording and reproducing, it is necessary to execute an initialization for changing the whole of a use area (a whole area of a disk) from the amorphous state just after forming the recording layer to the crystalline state.

As an initializing method in accordance with the prior art, there have been proposed a method of executing a flash initialization by means of a halogen lamp or a xenon lamp (Japanese Unexamined Patent Publication No. 8-153343), a method of executing an initialization in accordance with a high frequency wave heating (Japanese Unexamined Patent Publication No. 9-340071) and a method of a laser beam initialization in accordance with a laser beam irradiation (Japanese Unexamined Patent Publication Nos. 4-186530 and 8-124158).

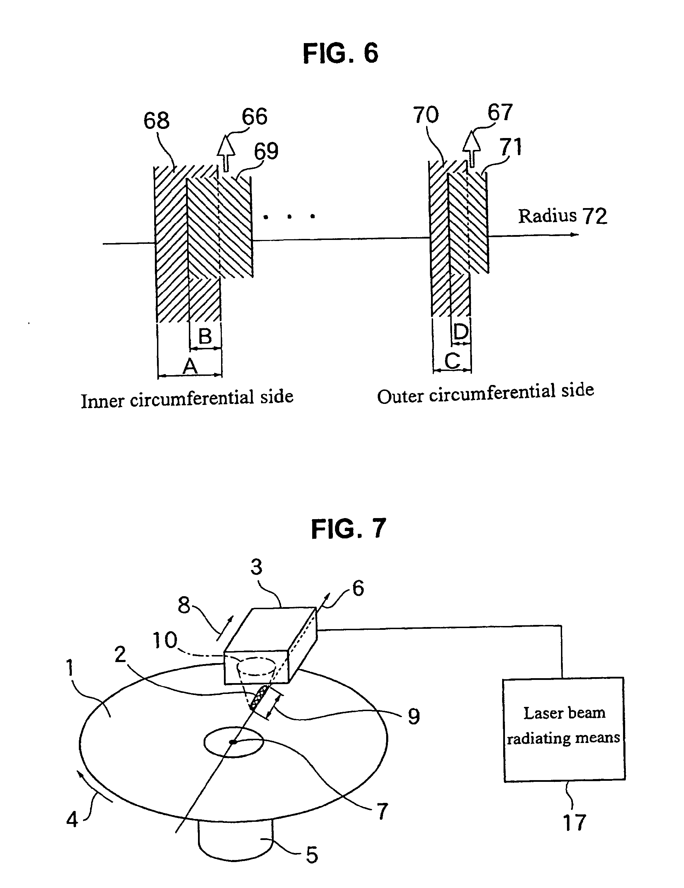

At present, only one initializing technique which comes into practical use is the laser beam initialization. A description will be briefly given below of the initializing apparatus and the initializing method by using Fig. 7.

An initializing apparatus shown in Fig. 7 is provided with a laser head 3 which irradiates a laser beam (reference numeral 10) on an optical disk 1 on the basis of a light source constituted by a high-power semiconductor laser element (not shown) of some W class, and forms an oval laser spot 2 having a longitudinal length 9 of about some hundreds $\mu$ m on a recording film surface of the optical disk, a laser pulse radiating means 17 for controlling a laser beam radiation, a spindle motor 5 for rotating the optical disk 1 in a direction of an arrow 4, and a carriage (not shown) which moves the laser head 3 in a radial direction 6 of the optical disk 1, and is structured such that the longitudinal direction of the oval laser spot 2 is aligned with the radial direction of the optical disk 1, and the initialization is executed while linearly moving the laser spot 2 in the radial direction of the optical disk 1 with rotating the optical disk 1.

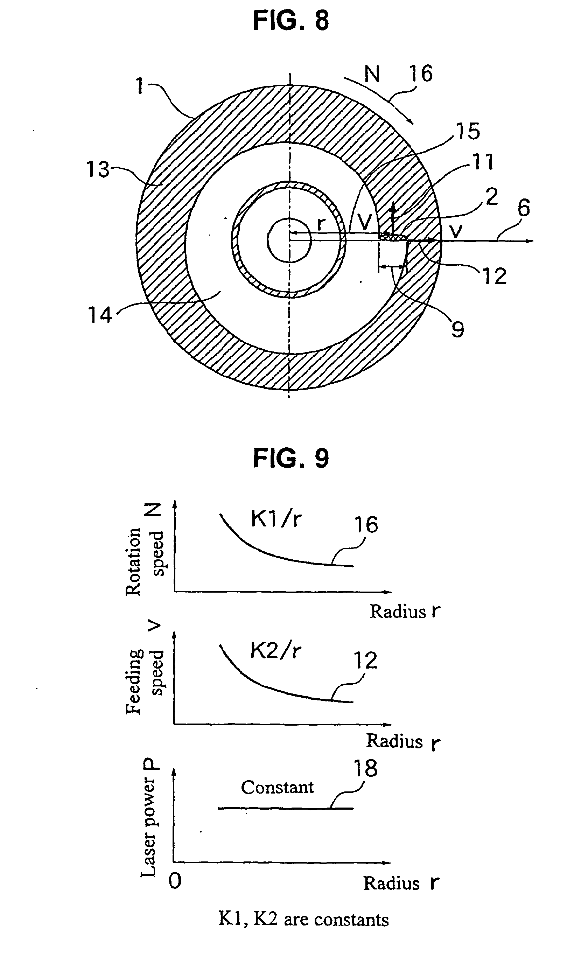

A description will be given of a state of the initialization in accordance with this prior art with reference to Fig. 8. Fig. 8 is a schematic view showing a state in which the conventional initializing operation is executed, as seen from a vertical direction of the optical disk surface. The conventional apparatus is structured, as shown in Fig. 8, such that the longitudinal direction 9 of the oval laser spot 2 is aligned with the radial direction 6 of the optical disk 1, the optical disk 1 is rotated at a rotation speed (N) 16 which is in inverse proportion to a spot radial position (r) 15 such that a speed at which the oval laser spot 2 relatively scans in a circumferential direction on the recording surface of the optical disk 1, that is, a linear speed (V) 11 becomes constant (CLV system: constant linear velocity), and is fed in the radial direction 6 of the optical disk at a feeding speed (V) 12 which is in inverse proportion to the spot radial position (r) 15 such that an overlapping rate (an overlapping amount) of the laser spot is constant (COR system: constant over-lap ratio), whereby the whole area of the recording film of the optical disk is initialized by spirally scanning the laser spot 2. In this case, the laser power under execution of the initialization is constant, a hatching portion 13 in the drawing indicates a portion which is not initialized, and a portion 14 which is not hatched indicates an initialized portion.

Fig. 9 shows a relation of an optical disk rotation speed, a laser spot feeding speed and a laser power with respect to a laser spot position radius in the CLV system and the COR system. Reference symbols K1 and K2 in Fig. 9 are constants in connection with the linear speed V and the laser spot overlapping rate. As is apparent from reference to the present drawing, in the prior art, the rotation speed 16 of the optical disk and the laser spot feeding speed 12 are controlled in such a manner as to be in inverse proportion to the laser spot radius (r) 15. In other words, the conventional apparatus controls such that rotation speed N and the feeding speed V are high in an inner circumferential side, and the rotation speed N and the feeding speed V become low toward an outer circumference.

In this case, recording and deleting (making amorphous and making crystalline) on the phase change type optical disk is generally achieved by a delicate operation of a reaching temperature and a cooling speed of the recording film heated by the laser beam. In the initializing technique of the phase change type optical disk, since the crystallization of the recording film is very sensitive with respect to an irradiation heat energy depending on (a) a power density, (b) a passing time, and (c) the number of irradiation (an overlapping rate of the laser spot) of the laser spot, it is necessary to set the power density, the passing time and the irradiating number of the laser spot to approximately the uniform values from the inner circumference of the optical disk to the outer circumference. In the case that the conditions such as the power density of the laser spot and the like are not approximately the uniform values from the inner circumference of the optical disk to the outer circumference, it is impossible to uniformly initialize the whole area of the optical disk. Accordingly, it is indispensable that the rotation of the optical disk and the feeding control in the radial direction of the laser spot employ the CLV system and the COR system as mentioned above.

In this case, there is shown a possibility of the initialization in the CAV system achieved by setting the longitudinal direction of the oval laser spot to the other angle than parallel with respect to the recording track direction (the optical disk circumferential direction) (Japanese Unexamined Patent Publication No. 4-186530), however, there is not described a realizing means for changing the angle of the laser spot while depending on the radial position of the laser spot.

On the other hand, in recent years, there is proposed a structure in which a high-power semiconductor laser (some W to some tens W) is mounted for the purpose of shortening a tact time in the initializing step, and the initialization is executed by using a large oval laser spot in which the oval laser spot is expanded in the short axial direction as well as the longitudinal direction. This technique can theoretically make a carriage feeding speed and a linear speed high, and is expected to contribute to the tack time reduction. However, in accordance with this technique, in the actual apparatus, an angular acceleration of the spindle motor and a feeding acceleration of the carriage become extremely high, and an operational accuracy in accordance with the CLV system and an operational accuracy in accordance with the COR system are deteriorated, whereby there tends to be generated such a problem that a uniformity of the initialized state is deteriorated. As a technique for solving the problem, there can be considered a method of improving a driving performance of the spindle motor and the carriage, however, since the apparatus is large in size and a high cost is necessary, this method is not preferable.

Further, in order to solve the problem mentioned above, in the conventional initializing apparatus shown in Fig. 7, there can be considered an initializing technique which keeps the rotation speed of the disk constant (CAV system: constant angular velocity), and executes only the laser power adjustment in the inner and outer circumferences. However, in this technique, since the time for which the laser spot passes through the recording film is different in the inner circumferential side and the outer circumferential side, there is a problem that it is hard to achieve a uniform initialization.

An object of the present invention is to solve the problems in the prior art, and to provide an initializing apparatus of an optical disk which can obtain a uniform initialized state from an innermost circumference of the optical disk to an outermost circumference while keeping a rotation speed of the optical disk and a feeding speed of a laser spot constant.

## DISKLOSURE OF THE INVENTION

In order to achieve the object mentioned above, in accordance with a first aspect of the present invention, there is provided an initializing apparatus of an optical disk for initializing an initialization required area of the optical disk by spirally scanning a laser beam as an oval laser spot on a surface of the rotating optical disk, comprising:

a laser pulse radiating means for pulse radiating the laser beam; and
a moving means for moving the radiated oval laser spot from one end of the initialization required radial area to another end at an angle $\alpha$ having a relation $0 < \alpha < 180$ degrees with respect to a radial direction of the optical disk,

wherein the moving means keeps the angle $\alpha$ of the laser spot, and the laser pulse radiating means generates the pulse such that a laser spot overlapping rate is uniform in inner and outer circumferences of the optical disk, thereby initializing the optical disk.

Further, in accordance with a second aspect of the present invention, the optical disk initializing apparatus is structured such that the longitudinal direction of the oval laser spot is arranged in the radial direction, in an innermost circumference of the initialization required radial area. Further, in accordance with a third aspect of the present invention, there is provided an initializing apparatus as recited in the first or second aspect, wherein the angle $\alpha$ is 90 degrees, and the laser power of the laser spot generated by the laser pulse radiating means is fixed.

Further, in accordance with a fourth aspect of the present invention, there is provided an initializing apparatus as recited in any one of the aspects mentioned above, wherein the oval laser spot is structured such that on the assumption that a length in a longitudinal direction is set to L, a length in a short axial direction is set to D, a radius of an innermost circumference of the initialization required radial area is set to ri, a laser spot width in an optical disk circumferential direction at a radius r is set to W, and a laser spot width in the optical disk radial direction at the radius r is set to H, the laser spot width W and the width H of the laser spot radiated by the laser pulse radiating means change in correspondence to the radius r in accordance with the following formula.

$$W = D \times r/(ri \times \sin^2 \alpha + \cos\alpha \times (r^2 - (ri \times \sin \alpha)^2)^{0.5})$$

$$H = L \times D/W$$

Further, in accordance with a fifth aspect of the present invention, there is provided an initializing apparatus of an optical disk for initializing an initialization required area of the optical disk by spirally scanning a laser beam as an oval laser spot on a surface of the rotating optical disk, comprising:

a laser pulse radiating means for pulse radiating the laser beam; and
a moving means for moving the radiated oval laser spot from one end of the initialization required radial area to another end,

wherein the moving means linearly moves the laser spot in a direction which does not intersect a radial rotation center of the optical disk from a state in which a longitudinal direction of the oval laser spot is aligned with the radial direction of the optical disk, and the laser pulse radiating means generates the pulse such that a laser spot overlapping rate is uniform in inner and outer circumferences of the optical disk, thereby initializing the optical disk.

Further, in accordance with a sixth aspect of the present invention, there is provided an initializing method of an optical disk for initializing an initialization required area of the optical disk by spirally scanning a laser beam as an oval laser spot on a surface of the rotating optical disk, wherein a whole area of the optical disk is initialized by moving an oval laser spot from one end of the initialization required radial area to another end at an angle $\alpha$ having a relation $0 < \alpha < 180$ degrees with respect to a radial direction of the optical disk linearly and at a constant speed while generating the pulse such that a laser spot overlapping rate is uniform in inner and outer circumferences of the optical disk, with rotating the optical disk at a fixed rotation speed.

Further, in accordance with a seventh aspect of the present invention, there is provided an initializing method of an optical disk as recited in the aspect mentioned above, wherein a position information on a linear moving range of the oval laser spot or a time information after starting the linear movement is employed as a laser beam radiation timing, a pulse cycle of the laser beam is made longer in the case that the position of the oval laser spot exists in the inner circumferential side of the optical disk, and the pulse cycle of the laser beam is made shorter in the case that the position of the oval laser spot exists in the outer circumferential side of the optical disk, whereby a whole area of the optical disk is initialized. Further, in accordance with an eighth aspect of the present invention, there is provided an initializing method of an optical disk as recited in any one of the aspects mentioned above, wherein the angle $\alpha$ is 90 degrees, and the laser power of the laser spot radiated by the laser pulse radiating means is fixed.

Further, in accordance with a ninth aspect of the present invention, there is provided an initializing method as recited in any one of the aspects mentioned above, wherein the oval laser spot is structured such that on the assumption that a length in a longitudinal direction is set to L, a length in a short axial direction is set to D, a radius of an innermost circumference of the initialization required radial area is set to ri, a laser spot width in an optical disk circumferential direction at a radius r is set to W, and a laser spot width in the optical disk radial direction at the radius r is set to H, the laser spot width W and the width H of the laser spot radiated by the laser pulse radiating means change in correspondence to the radius r in accordance with the following formula.

$$W = D \times r/(ri \times \sin^2\alpha + \cos\alpha \times (r^2 - (ri \times \sin \alpha)^2)^{0.5})$$

$$H = L \times D/W$$

Further, in accordance with a tenth aspect of the present invention, there is provided an initializing method of an optical disk for initializing an initialization required area of the optical disk by spirally scanning a laser beam as an oval laser spot on a surface of the rotating optical disk, comprising:

a laser pulse radiating means for pulse radiating the laser beam; and
a moving means for moving the radiated oval laser spot from one end of the initialization required radial area to another end,

wherein the moving means linearly moves the laser spot in a direction which does not intersect a radial rotation center of the optical disk from a state in which a longitudinal direction of the oval laser spot is aligned with the radial direction of the optical disk, and the laser pulse radiating means generates the pulse such that a laser spot overlapping rate is uniform in inner and outer circumferences of the optical disk, thereby initializing the optical disk.

## BRIEF DESCRIPTION OF THE DRAWINGS

Fig. 1 is a perspective view for explaining an initializing apparatus in accordance with an embodiment of the present invention;

Fig. 2 is a schematic view of a state in which an initializing operation is executed by the initializing apparatus in accordance with the embodiment of the present invention as seen in a vertical direction to an optical disk surface;

Fig. 3 is a view for explaining a relation between a width of a laser spot in a circumferential direction of the optical disk and a width of a laser spot in a radial direction of the optical disk orthogonal thereto with respect to a radial position of the laser spot in an initializing method in accordance with the present invention;

Fig. 4 is a chart showing an example of a calculation result of spot widths W and H with respect to a radius r;

Fig. 5 is a chart showing a rotation speed of the optical disk, a laser spot feeding speed and a laser power waveform during execution of the initializing operation with respect to the initializing method in Fig. 2A;

Fig. 6 is a view explaining a state in which a laser spot overlapping rate is uniform in an inner circumferential side and an outer circumferential side;

Fig. 7 is a perspective view of a conventional initializing apparatus;

Fig. 8 is a schematic view of a state in which a conventional initializing operation is executed as seen in a vertical direction to an optical disk surface; and

Fig. 9 is a chart showing a relation of a rotation speed of the optical disk, a laser spot feeding speed and a laser power with respect to a radius of the laser spot position in a CLV system and a COR system.

## BEST MODE FOR CARRYING OUT THE INVENTION

A description will be given below in detail of an embodiment of an initializing apparatus and an initializing method of an optical disk in accordance with the present invention with reference to the accompanying drawings.

<Description of Apparatus Structure>

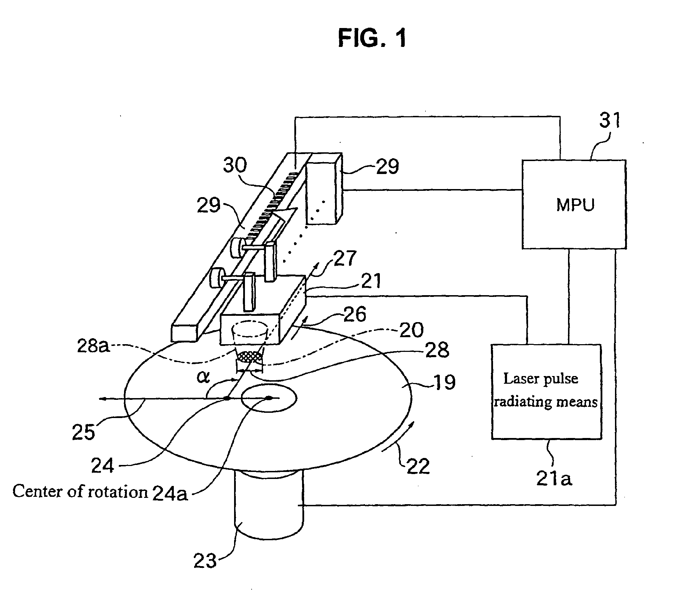

An initializing apparatus of an optical disk in accordance with the present embodiment is provided, as shown in Fig. 1, with a laser head 21 which irradiates a laser beam (reference symbol 28a) to an optical disk 19 corresponding to a subject to be initialized by a light source constituted by a high-power semiconductor laser element (not shown) of some W to some tens W class, and forms an oval laser spot 20 in which a length in a longitudinal direction 28 is about some hundreds $\mu$ m to 10 mm on a recording film surface, a linear moving means (a pulse motor, a guide rail and the like) 29 which arranges the irradiated oval laser spot 20 in an innermost circumferential side 24 of an initialization required radial area such that the laser spot longitudinal direction 28 coincides with a radial direction 25, and moves linearly 26 to an outermost circumferential side in a state in which an angle $\alpha$ is kept with respect to the disk radial direction 25, a position detecting means (a scale, an optical sensor and the like) 30 which detects a position of the laser spot 20 in a linear direction 27 in the drawing, a rotating means (a spindle motor) 23 for rotating the optical disk 19 in a direction of an arrow 22, a laser pulse radiating means 21a for radiating the high-power semiconductor laser element in a pulse manner, and a micro processor unit (MPU) 31 which controls the position detecting means 30, the linear moving means 29 and the rotating means 23. The MPU 31 has an arithmetic operating function, a timer and a data memory built-in.

In particular, the present apparatus can set an angle optionally between 0 degree and 180 degrees, by rotating the angle $\alpha$ of the laser spot 20 within a surface parallel to the optical disk surface with respect to the linear moving means 29. Further, it is necessary to arrange and move the linear moving means in accordance with the present embodiment in such a manner as to prevent the laser spot linear movement extension from intersecting the rotation center of the optical disk.

<Description of Outline of Initializing Operation>

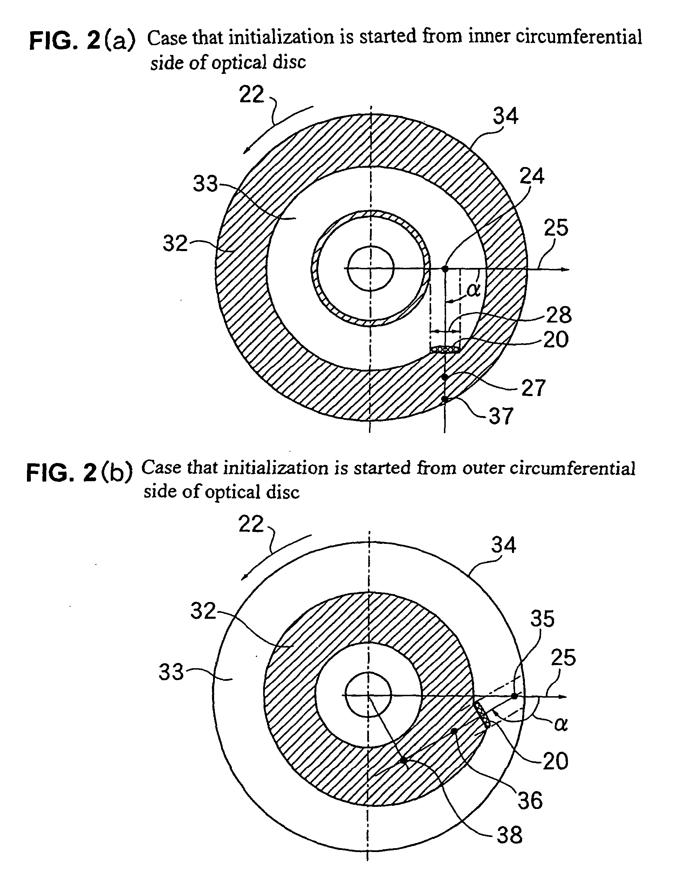

Fig. 2 is a schematic view of a state in which an initializing operation is executed by the initializing apparatus in accordance with the present embodiment as seen in a vertical direction to the optical disk surface. Fig. 2A shows a case that the initializing operation is started from an inner circumferential side of the optical disk. As is apparent from reference to Fig. 2, in the initializing apparatus in accordance with the present embodiment, an oval laser spot 20 irradiated on a recording film of the optical disk 19 is arranged in the innermost circumferential side 24 of a radial area required to be initialized in such a manner that the longitudinal direction 28 of the laser spot is in parallel to the radial direction 25 (a direction of a line passing through a center of the disk) , while rotating an optical disk 34 in a direction of an arrow 22 at a fixed rotation speed by the rotating means 23, and the initializing apparatus is operated such that a linear movement 27 of the spot 20 is executed at a constant speed to an outermost circumferential side 37 at a fixed angle $\alpha$ set with respect to the optical disk radial direction 25. At this time, whatever position the laser spot exists, the linear movement direction 27 of the laser spot and the longitudinal direction 28 of the laser spot are set so as to go straight.

In other words, the initializing apparatus in accordance with the present embodiment operates such as to spirally initialize a whole area of the optical disk, by moving the oval laser spot 20 from the innermost circumferential side 24 to the outermost circumferential side in a state of keeping the fixed angle α (90 degrees in this example) with respect to the optical disk radial direction 25, under a state of setting the rotation speed 22 and the feeding speed 27 for preventing a non-initialized gap from being generated. In this case, in the drawing, a hatching portion 32 indicates the non-initialized portion, and a no-hatching portion 33 indicates the initialized portion.

Since the initializing apparatus in accordance with the present embodiment executes the initializing operation by linearly moving the oval laser spot 20 to the outermost circumference in a state of keeping the fixed angle α (90 degrees in this example) set with respect to the optical disk radial direction 25, it is possible to obtain a uniform initializing state from the innermost circumference to the outermost circumference of the optical disk on the basis of a principle mentioned below.

Fig. 2B is a schematic view of a state in which the initializing operation is executed, in the case of starting the initializing operation from the outer circumferential side of the optical disk. In the same manner as Fig. 2A, the whole area of the optical disk is spirally initialized by arranging the oval laser spot 20 irradiated on the recording film of the optical disk 19 in an outermost circumferential side 35 of the initialization required radial area while rotating 22 the optical disk 34 at a fixed rotation speed by a rotating means, and linearly moving the oval laser spot 20 at a constant speed to an innermost circumferential side 38 at a fixed angle α (155 degrees in this example) set with respect to the optical disk radial direction 25. At this time, the structure is made such that the linear movement direction 36 and the laser spot longitudinal direction 28 go straight whatever position the laser spot exists. Further, in the present apparatus, the rotation speed 22 and the feeding speed 36 are set so as to prevent the non-initialized gap from being generated.

For example, the rotation speed 22 and the feeding speed 36 are preferably set to a rotation speed of 1000 rpm to 4000 rpm and a speed of 5 mm/s to 50 mm/s, in the case that the angle α in Fig. 2A is 90 degrees, or the case that the angle α in Fig. 2B is 155 degrees, and are preferably set to a rotation speed of 500 rpm to 2000 rpm and a speed of 10 mm/s to 100 mm/s in the case that the angle α in Fig. 2A is 79 degrees or the angle α in Fig. 2B is 156 degrees. In the case that the angle α in Fig. 2A is small and in the case that the angle α in Fig. 2B is large, the initialized width H in an outer circumferential end of the disk can be secured wide, so that the feeding speed can be made high.

<Description of Laser Spot>

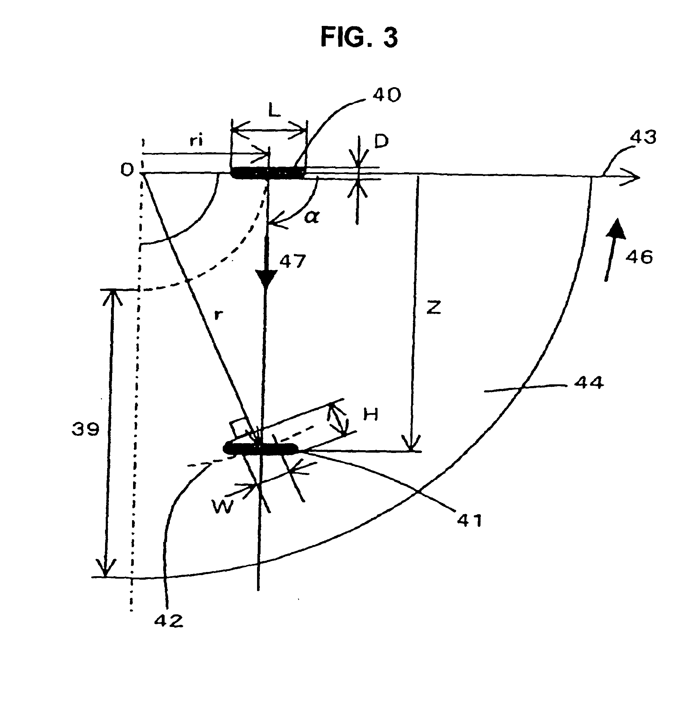

Next, a description will be given of an arrangement of the laser spot depending upon the radial position of the laser spot which is preferable for the present embodiment. Fig. 3 is a view showing a relation between the width W of the laser spot in the circumferential direction of the optical disk and the width H of the laser spot in the radial direction of the optical disk orthogonal thereto with respect to the radial position of the laser spot.

Fig. 3 shows the optical disk as seen in the vertical direction to the disk surface after being divided into four pieces, and shows a state 40 in which the oval laser spot is positioned in the innermost circumferential side of the initialization required radial area 39 of the optical disk 44 and is irradiated to a position extending in a direction coinciding with the radial direction of the optical disk, and a state 41 in which the oval laser spot is irradiated to a position at an optional radius r on a linear extension having the angle α with respect to the radial direction 43 of the optical disk. In this case, the longitudinal direction of the laser spot in the state 41 linearly moves in a direction of an arrow 47 while keeping a parallel relation to the radial direction 43 of the optical disk, because the angle α is 90 degree. Accordingly, the laser spot in accordance with the present embodiment linearly moves in a direction which does not intersect the rotation center of the optical disk.

In the optical disk initializing apparatus and method in accordance with the present embodiment, the widths W and H are geometrically changed in correspondence to the irradiation radial position r of the laser spot. A description will be given next of a principle by which the widths W and H are changed.

On the assumption that a length in a longitudinal direction of the oval laser spot is set to L, a length in a short axial direction of the oval laser spot is set to D, and a radius of an innermost circumference of the initialization required radial area 39 is set to ri, the laser spot width W in the optical disk circumferential direction 42 at the radius r is changed as expressed by the following formula which is conducted on the basis of a geometric calculation.

$$W = D \times r/(ri \times \sin^2\alpha + \cos\alpha \times (r^2 - (ri \times \sin\alpha)^2)^{0.5})$$

Further, in accordance with the present initializing apparatus and method, the laser spot width H in the optical disk radial direction at the radius r is changed as expressed by the following formula which is conducted on the basis of a geometric calculation.

$$H = L \times D/W$$

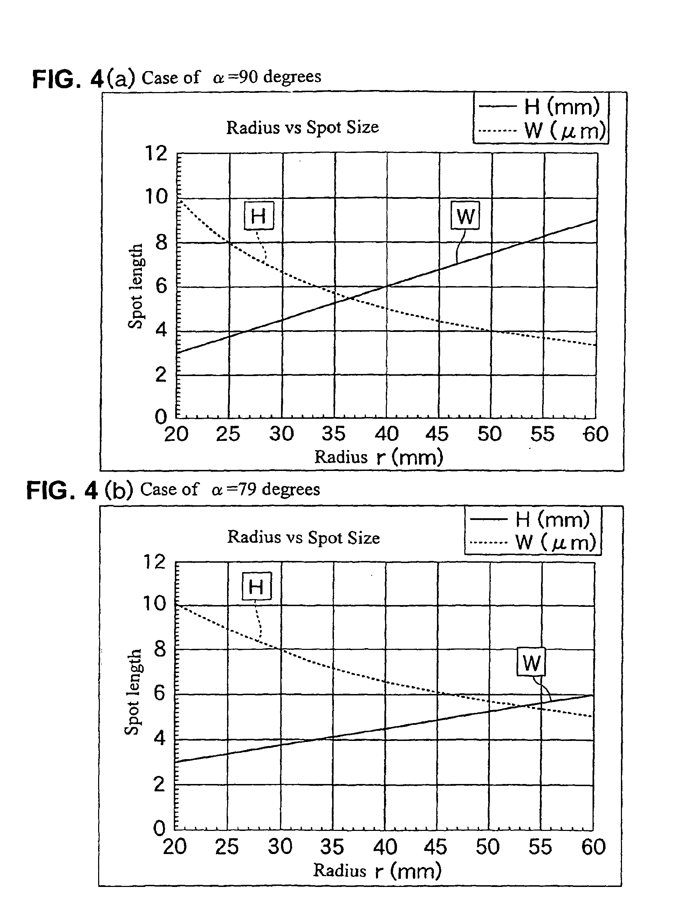

Fig. 4 is a chart showing an example of the calculation results of the laser spot width W and the laser spot width H with respect to the radius r of the laser spot on the basis of the formula mentioned above. In the present calculation example, the length is set to 10 mm, the length D is set to 3 $\mu$ m, the radius ri is set to 20 mm, and the outermost circumferential radius of the initialization required radial area is set to 60 mm.

Fig. 4A shows the case that the angle $\alpha$ is 90 degrees. It is known that the width W is 3 $\mu$ m in the case of r = 20 mm, is 9 $\mu$ m in the case of r = 60 mm, and is linearly changed in proportion to the value r, and a rate of the laser spot widths W of the inner and outer circumferences is 1 : 3.

In the same manner, Fig. 4B shows the case that the angle $\alpha$ is 79 degrees. It is known that the width W is 3 $\mu$ m in the case of r = 20 mm, is 6 $\mu$ m in the case of r = 60 mm, and approximately connects two points linearly, and the rate of the widths W of the inner and outer circumferences is 1 : 2.

As mentioned above, it is understood that the width W is linearly and continuously increased in correspondence to the increase of the radial position r of the laser spot, and the laser spot width H is reduced approximately in inverse proportion to the radius r, in both Figs. 4A and 4B.

As mentioned above, in the optical disk initializing apparatus and method in accordance with the present embodiment, the widths L and W are changed in correspondence to the irradiation position (the radius) of the laser spot, by setting the oval laser spot with respect to the radial direction of the optical disk and executing the initializing operation while scanning in a state of keeping the fixed angle $\alpha$. The shape of the laser spot is formed in a shape elongated in the laser spot scanning direction toward the outer circumferential side. Accordingly, a temporal change of an irradiated heat energy applied to one point on the optical disk recording film surface is continuously uni form from the inner circumferential side to the outer circumferential side, whereby it is possible to supply a uniform initializing energy from the innermost circumference to the outermost circumference of the optical disk.

In this case, in the present specification, the whole area of the optical disk is initialized by linearly moving the laser spot within the radius of the optical disk. The moving area to which the initialization is applied on the basis of the linear movement of the laser spot is called as an initialization required radial area.

<Description of Rotation Speed and Feeding Speed>

In Fig. 3, in the case that a rotation speed 46 is high with respect to a laser spot linear moving speed 47, the laser spot width W corresponds to a laser spot width in a laser spot scanning direction, and the laser spot width H corresponds to an initializing width. As a practical value, the rotation speed 46 of the optical disk is 200 to 4000 rpm, and the linear moving speed 47 is 5 to 100 mm/s. Even in the case of finding the worst value, the rotation speed of the optical disk is one digit larger.

On the other hand, in the case that the rotation speed 46 of the optical disk is fixed, the speed (the linear speed) in the circumferential direction 42 becomes higher toward the outer circumference, that is, in accordance with an increase of the radial position r. If the width W is linearly and continuously increased in accordance with the increase of the radial position r of the laser spot as mentioned above, it is known that a time for which the laser spot passes through one point on the optical disk recording film surface is approximately a constant value from the innermost circumference to the outermost circumference even in the case that the rotation speed 46 of the optical disk is fixed.

In particular, in the case that the angle $\alpha$ satisfies the relation $\alpha$ = 90 degrees, the time for which the laser spot passes through one point on the optical disk recording film surface becomes continuously the same value from the innermost circumference to the outermost circumference. Further, since an intensity distribution of the laser spot in the laser spot scanning direction is formed in the shape enlarged in the laser spot scanning direction toward the outer circumferential side, the temporal change of the irradiation heat energy applied to one point on the optical disk recording film surface is continuously uniform from the innermost circumferential side to the outermost circumferential side. Further, the uniform laser spot power density (W/m$^2$) is secured at any radial position r of the laser spot, by keeping the laser power to a fixed value.

In this case, in the initializing apparatus and method in the case that the angle $\alpha$ is not limited to 90 degrees, and the laser power is not limited to the fixed value, it is possible to uniformize the laser spot power density applied to the optical disk, by finely adjusting the laser power depending upon the angle $\alpha$ and the radius, and changing the laser irradiation state in the inner circumferential side and the outer circumferential side of the optical disk.

<Description of Laser Power>

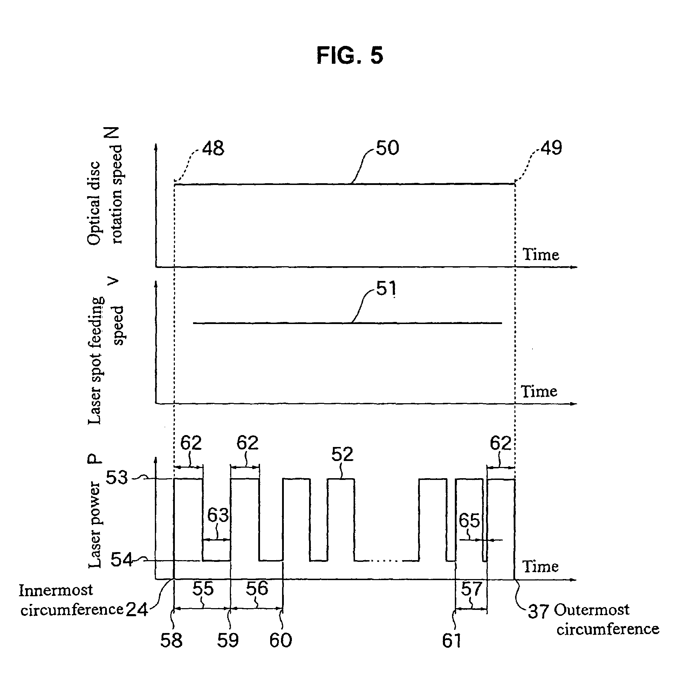

Fig. 5 is a chart showing the relation of the rotation speed of the optical disk, the laser spot feeding speed and the laser power waveform during execution of the initializing operation with respect to the initializing method shown in Fig. 2A. Each of horizontal axes in Fig. 5 indicates a time from an initialization start 48 to an initialization end 49, and vertical axes indicate an optical disk rotation speed N, a laser spot feeding speed v and a laser power P in the order from the above. The initialization start position 48 is the innermost circumference 24 of the optical disk and the initialization end position 49 is the outermost circumference of the optical disk 37.

Further, an optical disk rotation speed 50 and a laser spot feeding speed 51 are fixed to a fixed value from the innermost circumference 24 to the outermost circumference 37. The laser spot feeding speed 51 is determined while considering to prevent the gap of the non-initialized portion from being generated even in the outer circumferential end 37 of the optical disk in which the initialized width H is narrowest. In this case, the laser spot overlapping rate of the optical disk initialization is based on the laser spot overlapping rate in the outer circumferential end 37 of the optical disk. The laser continuously executes a pulse radiation 52.

The pulse radiation 52 is of a level that a level of a top power 53 of the pulse executes the initialization, and of a level that a level of a bottom power 54 does not execute the initialization. Further, the pulse radiation 52 is controlled such that cycles 55 and 56 of the pulse are made longer toward the inner circumferential side 24 of the laser spot, and a cycle 57 of the pulse is made shorter toward the outer circumferential side. Radiation timings 58, 59, 60 and 61 determining the pulse cycles 55, 56 and 57 are determined by calculating from a position z (in Fig. 3) of the laser spot feeding direction on the basis of the relation of the laser spot width H with respect to the radius r shown in Fig. 4, such that the laser spot overlapping rate becomes equal to the laser spot overlapping rate in the outer circumferential end of the optical disk in a whole area of the optical disk.

The pulse radiation timings 58, 59, 60 and 61 can be calculated as a time after the initialization start 48, and can be controlled on the basis of a predetermined timing. It is desirable that a pulse width 62 is set to be approximately uniform from the inner circumferential side to the outer circumferential side and is set to a range one to two times of the rotation cycle. In this case, reference numerals 63 and 65 denote a pulse interval time in the inner circumference and the outer circumference of the disk. It is known that the interval time is longer in the inner circumference and shorter in the outer circumference.

As mentioned above, in the initializing apparatus of the optical disk in accordance with the present embodiment, the pulse width of the laser spot is changed in the inner and outer circumferences by moving the oval laser spot 20 mentioned above from the innermost circumferential side 24 to the outermost circumferential side in a state of keeping the angle $\alpha$ with respect to the optical disk radial direction 25, under a state in which the rotation speed 22 and the feeding speed 27 are set for preventing the non-initialized gap from being generated, and the initialization can be uniformly executed by keeping the laser spot overlapping rate constant.

<Description of Laser Spot Overlapping Rate>

A description will be given of the matter that the laser spot overlapping rate in the inner and outer circumferences are the same, in the initializing apparatus and method in accordance with the present embodiment, with reference to Fig. 6. Fig. 6 is a view for explaining the state in which the laser spot overlapping rate is uniform in the inner circumferential side and the outer circumferential side, in which a hatching portion indicates an initialized area, and arrows 66 and 67 indicate the scanning direction of the laser spot, and are approximately orthogonal to the optical disk radial direction. Further, in the drawing, reference symbol A denotes an initialized width in the inner circumferential side, reference symbol B denotes an overlapping width at the position, reference symbol C denotes an initialized width in the outer circumferential side, and reference symbol D denotes an overlapping width at the position. A relation of these widths satisfies the formula of width B/width A = width D/width C = constant.

In the present embodiment, in both the inner and outer circumferences, times required from the initialization of areas 68 and 70 to the next initialized areas 69 and 71 correspond to the pulse interval times 63 and 65 in Fig. 5, and it is possible to keep the overlapping width of the laser spot uniform as shown in Fig. 6, by dropping down the laser to the bottom power 54, whereby it is possible to execute the uniform initialization.

In this case, it can be considered that the laser power is set to a complete OFF state in place of the bottom power 54 mentioned above, however, in the case that an automatic focusing control is executed, it is preferable to set to the power which does not initialize. In accordance with the present embodiment, the relation of width B/width A = width D/width C is established, whereby it is understood that the laser spot overlapping rate is fixed. In this case, the control method of executing the continuous pulse radiation of the laser beam mentioned above can reduce an excessive laser irradiation caused by the increase of the laser spot overlapping rate in the inner circumferential side.

<Description of Operation>

Next, a description will be given of an example of a series of operations of the initializing apparatus in accordance with the present embodiment with reference to Figs. 1 and 5. The disk rotation speed, the laser spot overlapping rate, and the peak power and the bottom power of the laser power in accordance with the initializing operation are previously applied to and stored in the data memory in the MPU 31 by an input apparatus (not shown). The MPU 31 calculates the radiation timing positions 58, 59, 60 and 61 on the straight line 27, the laser radiation time (the peak power time) 62 and the feeding speed 51 on the basis of the disk rotation speed and the laser spot overlapping rate, and stores the calculation result in the data memory. In this case, as the initial state, the laser spot 20 is positioned at the initialization start position 24 by the position detecting means 30 and the linear moving means 29.

Next, in the present apparatus, the rotating means 23 rotates as shown by an arrow 22 the optical disk 19 at the predetermined rotation speed 50 on the basis of the command from the MPU 31, and the MPU 31 outputs a radiation command to the laser pulse radiating means 21 on the basis of the detection of a steady state in the disk rotation and commands to the linear moving means 29 so as to move as shown by an arrow 26 the laser spot 20 at the feeding speed 51 stored in the data memory.

The position of the laser spot 20 during the linear movement is detected in real time by the position detecting means 30, and the MPU compares the position of the laser spot changing every moment with the radiation timing positions 58, 59, 60 and 61 stored in the data memory and makes the laser pulse radiating means 21a pulse-radiate only for the radiation time 62 stored in the data memory in the case that the positions coincide with each other, thereby operating such as to execute the initialization of the optical disk.

<Summary>

In the phase change type optical disk corresponding to the subject of the present invention, as mentioned above, since the crystallization of the recording film is very sensitive with respect to the irradiation heat energy depending on (a) the power density of the laser spot, (b) the passing time of the laser spot, and (c) the number of irradiation (the overlapping rate of the laser spot), it is necessary to set the power density of the laser spot, the passing time of the laser spot and the irradiating number to approximately the uniform values from the inner circumference of the optical disk to the outer circumference.

In the initializing apparatus and method in accordance with the embodiment mentioned above, since the shape of the laser spot is formed in the shape enlarged in the laser spot scanning direction toward the outer circumferential side, (a) the power density is continuously uniform from the inner circumferential side to the outer circumferential side in the irradiation heat energy applied to one point on the optical disk recording film surface, (b) the time for which the laser spot passes through one point on the optical disk recording film surface is continuously constant from the innermost circumference to the outermost circumference, and (c) the number of irradiation is controlled to be constant, whereby it is possible to satisfy the uniform initializing conditions (a) to (c) of the phase change type optical disk mentioned above.

In particular, in the initializing apparatus and method in accordance with the present invention, in the case that the angle $\alpha$ is set to 90 degrees and the laser power is fixed, the uniform irradiation time and the irradiation heat energy can be applied to the whole area of the optical disk, by controlling such that the overlapping rate of the laser spot is constant from the innermost circumference to the outermost circumference, whereby it is possible to obtain the uniform initialized state.

As mentioned above, the initializing apparatus and method in accordance with the present invention can uniformly initialize the whole surface of the optical disk by moving the pulse radiation at the constant speed to the disk outermost circumference in a sequentially repeated manner while detecting the position of the laser spot. In this case, the timing of the pulse generation may be radiation controlled on the basis of a predetermined timing.

In the embodiment mentioned above, the description is given of the example that the initialization is executed by moving the laser spot from the inner circumferential side of the optical disk to the outer circumferential side, however, may be executed from the outer circumferential side in accordance with the same method.

## INDUSTRIAL APPLICABILITY

As is apparent from the description mentioned above, in the initializing apparatus of the optical disk and the initializing method of the same in accordance with the present invention, the same laser spot passing time can be secured in whatever radial position from the innermost circumference to the outermost circumference, by arranging the longitudinal direction of the oval laser spot on the innermost circumference of the optical disk with respect to the optical disk rotating at the constant rotation speed, and moving the laser beam linearly and at the constant speed to the outermost circumference in perpendicular to the radial direction while continuously pulse radiating the laser beam, and the same irradiation heat energy can be applied. Accordingly, the initializing apparatus and the initializing method of the optical disk in accordance with the present invention is suitable for obtaining the uniform initialized state in the whole area of the optical disk.

## Claims

1. An initializing apparatus of an optical disk for initializing an initialization required area of the optical disk by spirally scanning a laser beam as an oval laser spot on a surface of the rotating optical disk, comprising:

   a laser pulse radiating means for pulse radiating said laser beam; and
   a moving means for moving the radiated oval laser spot from one end of the initialization required radial area to another end at an angle $\alpha$ having a relation $0 < \alpha < 180$ degrees with respect to a radial direction of the optical disk,

   wherein said moving means keeps said angle $\alpha$ of the laser spot, and the laser pulse radiating means generates the pulse such that a laser spot overlapping rate is uniform in inner and outer circumferences of the optical disk, thereby initializing the optical disk.

2. An initializing apparatus as claimed in claim 1, wherein the longitudinal direction of the oval laser spot is arranged in the radial direction, in an innermost circumference of the initialization required radial area.

3. An initializing apparatus as claimed in claim 1 or 2, wherein said angle $\alpha$ is 90 degrees, and the laser power of the laser spot generated by the laser pulse radiating means is fixed

4. An initializing apparatus as claimed in any one of claim 1, 2 or 3, wherein said oval laser spot is structured such that on the assumption that a length in a longitudinal direction is set to L, a length in a short axial direction is set to D, a radius of an innermost circumference of the initialization required radial area is set to ri, a laser spot width in an optical disk circumferential direction at a radius r is set to W, and a laser spot width in the optical disk radial direction at the radius r is set to H, said laser spot width W and the width H of the laser spot radiated by the laser pulse radiating means change in correspondence to the radius r in accordance with the following formula.

$$W = D \times r/(ri \times \sin^2\alpha + \cos\alpha \times (r^2 - (ri \times \sin\alpha)^2)^{0.5})$$

$$H = L \times D/W$$

5. An initializing apparatus of an optical disk for initializing an initialization required area of the optical disk by spirally scanning a laser beam as an oval laser spot on a surface of the rotating optical disk, comprising:

   a laser pulse radiating means for pulse radiating said laser beam; and
   a moving means for moving the radiated oval laser spot from one end of the initialization required radial area to another end,

   wherein said moving means linearly moves the laser spot in a direction which does not intersect a radial rotation center of the optical disk from a state in which a longitudinal direction of the oval laser spot is aligned with the radial direction of the optical disk, and the laser pulse radiating means generates the pulse such that a laser spot overlapping rate is uniform in inner and outer circumferences of the optical disk, thereby initializing the optical disk.

6. An initializing method of an optical disk for initializing an initialization required area of the optical disk by spirally scanning a laser beam as an oval laser spot on a surface of the rotating optical disk, wherein a whole area of the optical disk is initialized by moving an oval laser spot from one end of the initialization required radial area to another end at an angle $\alpha$ having a relation $0 < \alpha < 180$ degrees with respect to a radial direction of the optical disk linearly and at a constant speed while generating the pulse such that a laser spot overlapping rate is uniform in inner and outer circumferences of the optical disk, with rotating the optical disk at a fixed rotation speed.

7. An initializing method of an optical disk as claimed in claim 6, wherein a position information on a linear moving range of said oval laser spot or a time information after starting the linear movement is employed as a laser beam radiation timing, a pulse cycle of the laser beam is made longer in the case that the position of the oval laser spot exists in the inner circumferential side of the optical disk, and the pulse cycle of the laser beam is made shorter in the case that the position of the oval laser spot exists in the outer circumferential side of the optical disk, whereby a whole area of the optical disk is initialized.

8. An initializing method as claimed in claim 6 or 7, wherein said angle $\alpha$ is 90 degrees, and the laser power of the laser spot radiated by the laser pulse radiating means is fixed.

9. An initializing method as claimed in claim 5, 6 or 7, wherein said oval laser spot is structured such that on the assumption that a length in a longitudinal direction is set to L, a length in a short axial direction is set to D, a radius of an innermost circumference of the initialization required radial area is set to ri, a laser spot width in an optical disk circumferential direction at a radius r is set to W, and a laser spot width in the optical disk radial direction at the radius r is set to H, said laser spot width W and the width H of the laser spot radiated by the laser pulse radiating means change in correspondence to the radius r in accordance with the following formula.

$$W = D \times r/(ri \times \sin^2\alpha + \cos\alpha \times (r^2 - (ri \times \sin\alpha)^2)^{0.5})$$

$$H = L \times D/W$$

**10.** An initializing method of an optical disk for initializing an initialization required area of the optical disk by spirally scanning a laser beam as an oval laser spot on a surface of the rotating optical disk, comprising:

a laser pulse radiating means for pulse radiating said laser beam; and
a moving means for moving the radiated oval laser spot from one end of the initialization required radial area to another end,

wherein said moving means linearly moves the laser spot in a direction which does not intersect a radial rotation center of the optical disk from a state in which a longitudinal direction of the oval laser spot is aligned with the radial direction of the optical disk, and the laser pulse radiating means generates the pulse such that a laser spot overlapping rate is uniform in inner and outer circumferences of the optical disk, thereby initializing the optical disk.

# FIG. 1

Center of rotation 24a

**FIG. 2(a)** Case that initialization is started from inner circumferential side of optical disc

**FIG. 2(b)** Case that initialization is started from outer circumferential side of optical disc

# FIG. 3

**FIG. 4**(a) Case of α=90 degrees

Radius vs Spot Size

**FIG. 4** (b) Case of α=79 degrees

Radius vs Spot Size

## FIG. 5

## FIG. 6

Inner circumferential side          Outer circumferential side

## FIG. 7

Laser beam radiating means

# FIG. 8

# FIG. 9

K1, K2 are constants

## INTERNATIONAL SEARCH REPORT

| | International application No. |
| --- | --- |
| | PCT/JP03/06741 |

A. CLASSIFICATION OF SUBJECT MATTER
   Int.Cl$^7$ G11B7/0055, G11B7/125, G11B7/26

According to International Patent Classification (IPC) or to both national classification and IPC

B. FIELDS SEARCHED

Minimum documentation searched (classification system followed by classification symbols)
   Int.Cl$^7$ G11B7/00-7/30

Documentation searched other than minimum documentation to the extent that such documents are included in the fields searched
   Jitsuyo Shinan Koho          1922-1996    Toroku Jitsuyo Shinan Koho    1994-2003
   Kokai Jitsuyo Shinan Koho    1971-2003    Jitsuyo Shinan Toroku Koho    1996-2003

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 10-011826 A (Hitachi Computer Kiki Kabushiki Kaisha), 16 January, 1998 (16.01.98), All pages (Family: none) | 1-10 |
| Y | JP 4-216323 A (Toray Industries, Inc.), 06 August, 1992 (06.08.92), All pages (Family: none) | 1-10 |
| Y | JP 11-161957 A (Hitachi, Ltd.), 18 June, 1999 (18.06.99), Par. Nos. [0021] to [0024]; Fig. 3 (Family: none) | 1-10 |

| ☒ Further documents are listed in the continuation of Box C. | ☐ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 14 August, 2003 (14.08.03) | 26 August, 2003 (26.08.03) |

| Name and mailing address of the ISA/ | Authorized officer |
| --- | --- |
| Japanese Patent Office | |
| Facsimile No. | Telephone No. |

Form PCT/ISA/210 (second sheet) (July 1998)

## INTERNATIONAL SEARCH REPORT

| International application No. |
| --- |
| PCT/JP03/06741 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 10-289447 A  (Hitachi, Ltd.),<br>27 October, 1998 (27.10.98),<br>Par. Nos. [0021] to [0022]; Fig. 2<br>(Family: none) | 1-10 |
| Y | JP 2001-243668 A  (Hitachi Computer Kiki Kabushiki<br>Kaisha),<br>07 September, 2001 (07.09.01),<br>Figs. 4 to 9<br>(Family: none) | 1-10 |
| Y | JP 8-124158 A  (Hitachi Computer Kiki Kabushiki<br>Kaisha),<br>17 May, 1996 (17.05.96),<br>Par. No. [0060]; Fig. 2<br>(Family: none) | 1-10 |

Form PCT/ISA/210 (continuation of second sheet) (July 1998)